# EUROPEAN PATENT APPLICATION

(11) **EP 4 763 463 A1**
(43) Date of publication of application: **24.06.2026**
(21) Application number: 24222268.5
(22) Date of filing: 20.12.2024
(51) Int. Cl.: B29C 35/08, B29C 45/00, B29C 48/00, F03D 1/06, B29C 59/10, B29C 59/14, B29C 59/16, B29K 75/00

(54) **REINFORCED LEADING EDGE OF A WIND TURBINE ROTOR BLADE**

(71) Applicant: Siemens Gamesa Renewable Energy A/S, 7330 Brande (DK)
(72) Inventor: Hasseriis, Simon Rokohl, 9000 Aalborg (DK)
(74) Representative: SGRE-Association

(57) **Abstract**

The present invention relates to a method for manufacturing a leading edge protection device (1) for a leading edge (2) of a wind turbine rotor blade (3). The method comprises providing a thermoplastic polyurethane material (4), processing the thermoplastic polyurethane material (4) by providing heat to the thermoplastic polyurethane material (4) and bringing the thermoplastic polyurethane material (4) into a predetermined shape to form the leading edge protection device (1) and further processing the leading edge protection device (1) by a surface treatment. The invention also relates to a method for manufacturing a wind turbine rotor blade (3) with a reinforced leading edge (2) and to a wind turbine rotor blade (3).

## Description

The present invention relates to a method for manufacturing a leading edge protection device for a leading edge of a wind turbine rotor blade. The invention also relates to a method for manufacturing a wind turbine rotor blade with a reinforced leading edge and to a wind turbine rotor blade with a reinforced leading edge.

It is known that the leading edge of a wind turbine rotor blade is exposed to a harsh environment all year and that the continuous attempts to extend lifetime and size of the wind turbine rotor blades put even higher requirements for ensuring a full lifetime performance. Therefore, leading edge protection (LEP) is widely used in the wind industry for protection of wind turbine rotor blades which are exposed to rain, salt and dirt at high impact speeds. If no LEP is used to protect the wind turbine rotor blades, the turbine's annual energy production (AEP) will decrease due to the damage of the wind turbine rotor blade surface.

Until now, various coatings and tapes have been developed for blade manufacturers in order to tackle this challenge for both onshore and offshore blades. However, the industry standard LEP has become the solid Polyurethane (PU) shells which is a soft rubber like material with a remarkable impact resistance. These PU shells have shown good performance in the lab scale rain erosion test. The PU shells are usually also thicker at the very leading edge compared to tapes and coatings, thus, providing an extra safety margin if damage should occur to an outer layer of the shell.

However, the PU shells also have certain disadvantages. They are manufactured by means of reaction injection molding, thus requiring time to cure in the mold, hence, this is quite expensive compared to other manufacturing methods such as extrusion and regular injection molding. Furthermore, these shells of approximately one meter length will have overlaps or gaps in between which also yields a certain AEP penalty when differing from the ideal airfoil profile.

It is therefore the object of the present invention to eliminate or at least partially eliminate the disadvantages described above in the case of a leading edge protection of a wind turbine rotor blade. In particular, it is the object of the present invention to create a method for manufacturing a leading edge protection device for a leading edge of a wind turbine rotor blade, a method for manufacturing a wind turbine rotor blade with a reinforced leading edge and a wind turbine rotor blade which reduce production complexity and/or avoid overlaps or gaps between adjacent leading edge protection devices in a simple and inexpensive manner.

The above object is achieved by the claims. Accordingly, the problem is solved by a method for manufacturing a leading edge protection device for a leading edge of a wind turbine rotor blade with the features of the independent claim 1, by a method for manufacturing a wind turbine rotor blade with a reinforced leading edge with the features of the subordinate claim 11 and by a wind turbine rotor blade with the features of the subordinate claim 15. Further features and details of the invention emerge from the subclaims, the description and the drawings. Features and details that are described in connection with the method for manufacturing a leading edge protection device for a leading edge of a wind turbine rotor blade according to the invention naturally also apply in connection with the method for manufacturing a wind turbine rotor blade with a reinforced leading edge according to the invention as well as the wind turbine rotor blade according to the invention and vice versa, so that with regard to the disclosure of the individual aspects of the invention, reference is or can always be made to each other.

According to a first aspect of the invention, the object is achieved by a method for manufacturing a leading edge protection device for a leading edge of a wind turbine rotor blade. The method comprises:
- Providing a thermoplastic polyurethane material,
- processing the thermoplastic polyurethane material by providing heat to the thermoplastic polyurethane material and bringing the thermoplastic polyurethane material into a predetermined shape to form the leading edge protection device, and
- further processing the leading edge protection device by a surface treatment.

Firstly, the thermoplastic polyurethane material (TPU) is provided. The thermoplastic polyurethane material can be provided in a pure condition without further chemical additives or in an enhanced condition with one or more chemical additives, e. g., for enhancing the stability, durability or processability of the thermoplastic polyurethane material. The thermoplastic polyurethane material can be provided as granulated material.

Then, the thermoplastic polyurethane material is processed by applying heat to the thermoplastic polyurethane material in a flowable or formable state. In this state, the thermoplastic polyurethane material is brought into the predetermined shape, e. g., by using a mold, a die or the like. In the predetermined shape, the thermoplastic polyurethane material has the shape of the leading edge protection device. At that point, the dimension of the leading edge protection device can be slightly larger than the dimensions of the final product due to shrinking effects while cooling.

In a subsequent process, the leading edge protection device is further processed by a surface treatment. Preferably, the surface treatment is performed in a way that at least one property of the leading edge protection device is modified, e. g., the surface is smoothened and/or the molecular structure is enhanced, e. g., hardened, or the like. By the surface treatment, the resilience of the leading edge protection device is increased compared to TPU without such surface treatment.

A method according to the invention has the advantage over conventional methods that in a simple and inexpensive way, a high performance leading edge protection device is provided. The use of TPU can potentially bring down the cost compared to regular PU by introducing faster and cheaper manufacturing methods. This can bring down the cost of wind turbine rotor blade manufacturing. Additionally, it is easier to recycle the TPU material in new applications compared to regular PU, when the wind turbine rotor blade has been dismantled and taken out of operation. Furthermore, there is the opportunity of welding adjacent leading edge protection devices to remove gaps and joints as seen with the leading edge protection devices today. This will potentially improve the wind turbines annual energy production.

According to a preferred further development of the invention, a method for manufacturing a leading edge protection device for a leading edge of a wind turbine rotor blade can provide that the processing of the thermoplastic polyurethane material comprises an extrusion process with the thermoplastic polyurethane material. For the extrusion process, it is preferred that the plastic granules are mechanically mixed, heated and forced throughout a die to a continuous sheet. The sheet can then be cut in a desired length depending on the final length of the leading edge protection devices. In a preferred option, the surface treatment can be included directly in the production line before or after the cutting process. This will enable a continuous surface treatment where it is also possible to have an in-line quality check of for instance color, roughness and/or gloss. This has the advantage that in a simple and inexpensive way, a high performance leading edge protection device is provided.

According to an alternative embodiment of the invention, it is preferred that the processing of the thermoplastic polyurethane material comprises an injection molding process with the thermoplastic polyurethane material. An injection molding process is a faster method than reaction injection molding, which is the current standard manufacturing method for leading edge protection devices. Preferably, the freshly molded leading edge protection devices are left in a chamber where the surface treatment is performed. In an automated solution, it is preferred to inject mold the leading edge protection devices, which are then moved with for instance a conveyor belt through a surface treatment cabinet. Hence, correct molding settings, conveyor belt speed and surface treatment settings can continuously be monitored from the same operator. This has the advantage that in a simple and inexpensive way, a high performance leading edge protection device is provided.

More preferred, a thermoplastic polyurethane material is provided as a thermoplastic material compound, wherein the thermoplastic material compound comprising a crosslinking agent. In other words, the thermoplastic material compound comprises at least the thermoplastic polyurethane material and the crosslinking agent. With a crosslinking agent, the stability of the leading edge protection device can be improved compared to a leading edge protection device of a thermoplastic polyurethane material, which does not comprise a crosslinking agent. This has the advantage that in a simple and inexpensive way, a high performance leading edge protection device is provided.

In a particularly preferred embodiment of a method according to the invention, the surface treatment is performed such that the crosslinking agent is activated. In this context, activating the crosslinking agent means that the thermoplastic polyurethane material compound is crosslinked in the surface treatment process. Thus, the structure of the leading edge protection device is hardened right after the shaping process. Preferably, the crosslinking process involves photocycloaddition of the thermoplastic polyurethane material, preferably prepared from EC-diol. This has the advantage that in a simple and inexpensive way, a high performance leading edge protection device is provided.

Preferably, a crosslinking agent is used, which comprises a bio-based aromatic chain extender. Preferably, the thermoplastic material compound is synthesized via the bio-based aromatic chain extender. This has the advantage that in a simple and inexpensive way, a high performance leading edge protection device is provided.

According to a preferred embodiment of the invention, a bio-based aromatic chain extender is used for the crosslinking agent, which is synthesized from caffeic acid. The usage of this kind of crosslinking agents for thermoplastic polyurethane materials are described in the scientific article "From thermoplastic polyurethane to covalent adaptable network via reversible photo-crosslinking of a biobased chain extender synthesized from caffeic acid", Polym. Chem., 2023, 14, 2685. This has the advantage that in a simple and inexpensive way, a high performance leading edge protection device is provided.

Particularly preferred, the surface treatment comprises exposing the surface of the leading edge protection device to UV-light and/or corona and/or plasma. With this kind of surface treatment, the structure of the leading edge protection device can be strengthened, e. g., by crosslinking. Moreover, such surface treatment methods are easy to provide and are suitable for components with a length of substantially more than one meter. This has the advantage that in a simple and inexpensive way, a high performance leading edge protection device is provided.

It is preferred, according to the invention, that the surface treatment is performed with the leading edge protection device before the leading edge protection device is fully solidified. In this context, it is further preferred that the working station for the surface treatment process is arranged in a production line right after the production unit for molding or extruding the leading edge protection device, e. g., after a cutting station of an extrusion station. For an injection molding process, it is preferred that the surface treatment process is performed with the leading edge protection device still arranged in a part, especially a lower part, of the mold. Alternatively, the surface treatment process can be performed in a chamber of the molding process. In all these cases, during the performing of the surface treatment process, the leading edge protection device has a temperature between the temperature of the extrusion or molding process and solidification temperature of the thermoplastic polyurethane material. This has the advantage that in a simple and inexpensive way, a high performance leading edge protection device is provided. Furthermore, the energy consumption of the method can be reduced.

It is preferred that the surface treatment is performed with the leading edge protection device having inherent stability and still being plastically deformable by external force. Within the scope of the invention, plastically deformable is considered as being deformable by pressure force from an initial shape to a second shape, wherein the thermoplastic polyurethane material can follow the deformation without developing cracks, breakages or the like. Within the scope of the invention, inherent stability is considered in that the leading edge protection device does not change its shape when exposed to gravity only. This can also be supported by a supporting structure, e. g., a mold or the like, for holding the leading edge protection device and thus preventing shape changes of the leading edge protection device due to gravity. This has the advantage that in a simple and inexpensive way, a high performance leading edge protection device is provided. Furthermore, the energy consumption of the method can be reduced.

According to a second aspect of the invention, the object is achieved by a method for manufacturing a wind turbine rotor blade with a reinforced leading edge, the method comprising:
- Manufacturing a wind turbine rotor blade with a leading edge,
- arranging a plurality of leading edge protection devices side by side at the leading edge of the wind turbine rotor blade, wherein the leading edge protection devices have been manufactured by a method according to the first aspect of the invention, and
- fixing the leading edge protection devices to the wind turbine rotor blade.

The manufacturing process of the wind turbine rotor blade can be any standard manufacturing process for wind turbine rotor blades as known from the state of the art. Preferably, the wind turbine rotor blade is manufactured such that the wind turbine rotor blade comprises a tip section and/or an intermediate section and/or a root section and/or a trailing edge and/or a spar cap and/or a lightning protection system, e. g., with a down connector, lightning rods or the like. The material used for the manufacturing process of the wind turbine rotor blade can be standard material for wind turbine rotor blades, such as glass fiber reinforced plastic (GRP), carbon fiber reinforced plastic (CRP) or the like.

Preferably, the leading edge protection devices are arranged side by side at the leading edge of the wind turbine rotor blade in a way that face sides of adjacent leading edge protection devices are mutually facing each other. Further preferred, the face sides are arranged in mutual close contact. In other words, it is preferred that the adjacent leading edge protection devices are arranged abutting each other. By these means, intersections between adjacent leading edge protection devices are provided. Preferably, the leading edge protection devices are arranged at the wind turbine rotor blade such that the leading edge protection devices cover the leading edge of the wind turbine rotor blade completely or at least substantially.

Finally, the leading edge protection devices are fixed to the leading edge section of the wind turbine rotor blade. This can be done by heat treatment, application of an adhesive, welding or the like.

The method for manufacturing a wind turbine rotor blade with a reinforced leading edge according to the invention has all the advantages that have already been described for a method for manufacturing a leading edge protection device for a leading edge of a wind turbine rotor blade according to the first aspect of the invention. Accordingly, the method for manufacturing a wind turbine rotor blade with a reinforced leading edge according to the invention has the advantage over conventional methods that in a simple and inexpensive way, a high performance wind turbine rotor blade is provided. The use of TPU for the leading edge protection device can potentially bring down the cost compared to regular PU by introducing faster and cheaper manufacturing methods. This can bring down the cost of wind turbine rotor blade manufacturing. Additionally, it is easier to recycle the TPU material in new applications compared to regular PU, when the wind turbine rotor blade has been dismantled and taken out of operation. Furthermore, there is the opportunity of welding adjacent leading edge protection devices to remove gaps and joints as seen with the leading edge protection devices today. This will potentially improve the wind turbine's annual energy production.

It is preferred that intersections between adjacent leading edge protection devices are smoothened by introducing heat into the leading edge protection devices. The heat is introduced in a way that the thermoplastic polyurethane material of the leading edge protection devices is softened or liquefied. The heat can be provided by welding, plasma or the like. The smoothening action can be provided by using gravity only, by applying a pressure tool, e. g., a roller, a die or the like, onto the intersection area. This has the advantage that in a simple and inexpensive way, a high performance wind turbine rotor blade is provided.

Further preferred, for smoothening the intersections, a u-shaped heating device is used. The heating device is moved from one side towards the intersection of the adjacent leading edge protection devices until the intersection is encompassed by the heating device. It is preferred that, in addition, the heating device applies pressure onto the intersection to improve the smoothening action. This has the advantage that in a simple and inexpensive way, a high performance wind turbine rotor blade with improved aerodynamic properties is provided.

Preferably, for smoothening the intersections, additional thermoplastic polyurethane material is provided at the intersections. By the use of additional thermoplastic polyurethane material, even larger gaps between adjacent leading edge protection devices can be closed smoothly. The additional thermoplastic polyurethane material can be provided as a string, a band, a stick or the like. Further preferred, the additional thermoplastic polyurethane material is same material or at least a substantially similar material as the material of the leading edge protection devices. Thus, a very consistent surface can be provided. This has the advantage that in a simple and inexpensive way, a high performance wind turbine rotor blade with improved aerodynamic properties is provided.

According to a third aspect of the invention, the object is achieved by a wind turbine rotor blade. The wind turbine rotor blade comprises an elongated body with a leading edge, wherein at the leading edge, a leading edge protection device is arranged. According to the invention, the wind turbine rotor blade is manufactured by a method according to the second aspect of the invention. Thus, the wind turbine rotor blade comprising a leading edge protection device of a thermoplastic polyurethane material, covering the leading edge.

The wind turbine rotor blade according to the invention has all the advantages that have already been described for a method for manufacturing a leading edge protection device for a leading edge of a wind turbine rotor blade according to the first aspect of the invention and for a method for manufacturing a wind turbine rotor blade with a reinforced leading edge according to the second aspect of the invention. Accordingly, the wind turbine rotor blade according to the invention has the advantage over conventional wind turbine rotor blades that in a simple and inexpensive way, a high performance wind turbine rotor blade is provided. The use of TPU for the leading edge protection device can potentially bring down the cost compared to regular PU by introducing faster and cheaper manufacturing methods. This can bring down the cost of wind turbine rotor blade manufacturing. Additionally, it is easier to recycle the TPU material in new applications compared to regular PU, when the wind turbine rotor blade has been dismantled and taken out of operation. This will potentially improve the wind turbine's annual energy production.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
- Figure 1: shows a schematic side view of a production line for performing a method for manufacturing a leading edge protection device for a leading edge of a wind turbine rotor blade according to a preferred embodiment of the invention,
- Figure 2: shows a schematic view of the molecular structure of a thermoplastic material compound with a thermoplastic polyurethane material and a crosslinking agent in a first state,
- Figure 3: shows a schematic view of the molecular structure of fig. 2 in a second state,
- Figure 4: shows a schematic flow chart of a method for manufacturing a leading edge protection device for a leading edge of a wind turbine rotor blade according to a preferred embodiment of the invention,
- Figure 5: shows a schematic flow chart of a method for manufacturing a wind turbine rotor blade according to a preferred embodiment of the invention, and
- Figure 6: shows a schematic perspective view of a wind turbine rotor blade according to a preferred embodiment of the invention.

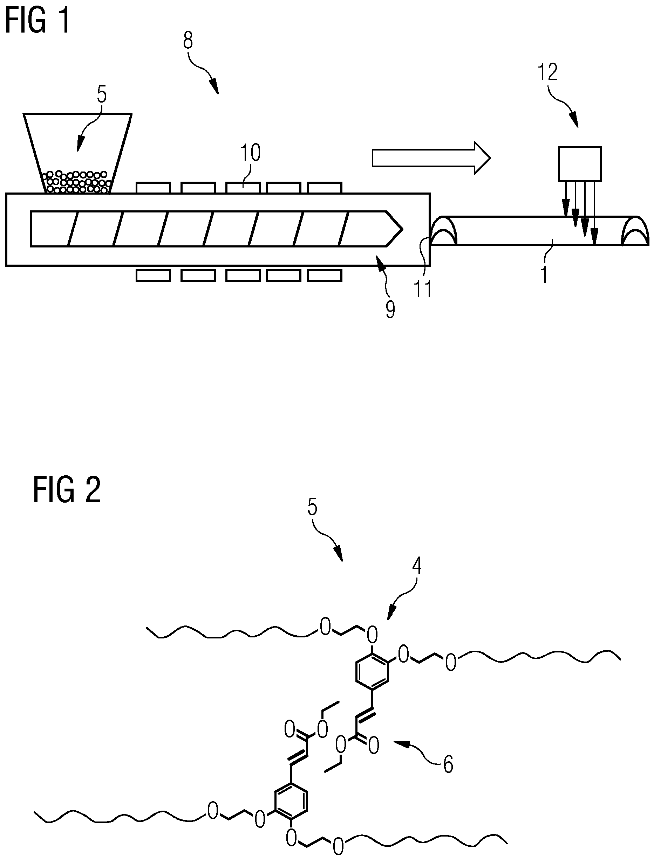

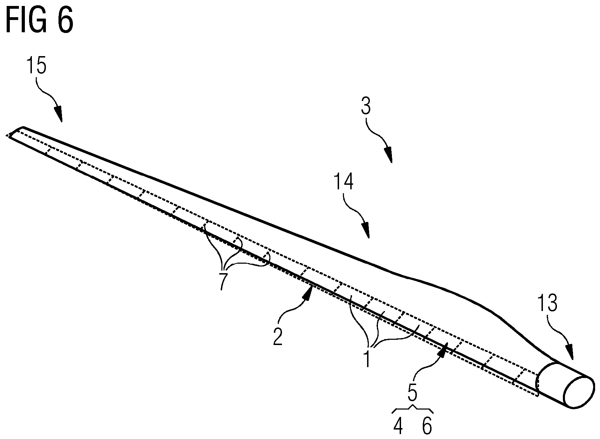

Elements with the same function and effectiveness are denoted each in fig. 1 to 6 with the same reference numbers.

In fig. 1, a production line for performing a method for manufacturing a leading edge protection device 1 for a leading edge 2 of a wind turbine rotor blade 3 according to a preferred embodiment of the invention is shown in a schematic side view. The production line comprises an extrusion machine 8 and a surface treatment device 12.

In this example, a thermoplastic material compound 5 is provided as a granola to the extrusion machine 8 and forwarded towards a shaping die 11 of the extrusion machine 8 through a heating device 10 by a conveying screw 9. Thereby, the thermoplastic material compound 5 is melted and shaped by being pressed though the shaping die 11. With a not shown cutting machine, the processed thermoplastic material compound 5 can be cut to the final length.

By these means, the leading edge protection device 1 is substantially produced. With the successive surface treatment device 12, the surface of the leading edge protection device 1 is treated. Thus, the thermoplastic material compound 5 is crosslinked and thereby hardened.

Fig. 2 shows the molecular structure of a thermoplastic material compound 5 with a thermoplastic polyurethane material 4 and a crosslinking agent 6 in a first state. In the first state, the molecules of the thermoplastic polyurethane material 4 have a first mutual distance. The crosslinking agent 6, arranged at the molecules of the thermoplastic polyurethane material 4, is not activated. Thus, the adjacent molecules of the crosslinking agent 6 are mutually spaced apart.

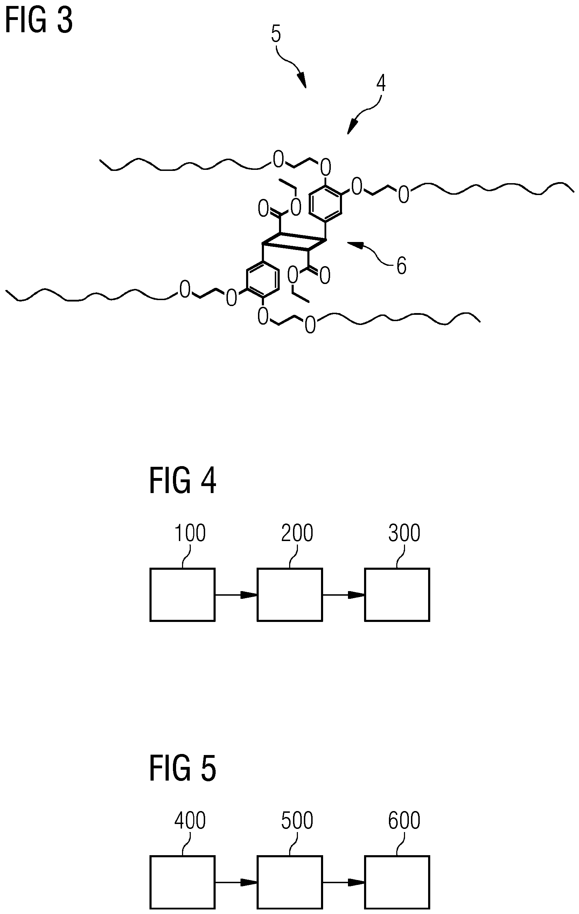

In fig. 3, the molecular structure of fig. 2 is shown in a second state. In the second state, the molecules of the thermoplastic polyurethane material 4 have a second mutual distance, wherein the second mutual distance is shorter than the first mutual distance. The crosslinking agent 6, arranged at the molecules of the thermoplastic polyurethane material 4, has been activated. Thus, the adjacent molecules of the crosslinking agent 6 are mutually crosslinked.

Fig. 4 shows a method for manufacturing a leading edge protection device 1 for a leading edge 2 of a wind turbine rotor blade 3 according to a preferred embodiment of the invention in a schematic flow chart. In a first method action 100, a thermoplastic polyurethane material 4 is provided. Preferably, the thermoplastic polyurethane material 4 is provided as a granola. Further preferred, the thermoplastic polyurethane material 4 is provided as a thermoplastic material compound 5 with the thermoplastic polyurethane material 4 and a crosslinking agent 6.

In a second method action 200, the thermoplastic polyurethane material 4 is processed by providing heat to the thermoplastic polyurethane material 4 and bringing the thermoplastic polyurethane material 4 into a predetermined shape to form the leading edge protection device 1. Preferably, this is done by an extrusion process or an injection molding process.

In a third method action 300, the leading edge protection device 1 is further processed by a surface treatment device 12, performing a surface treatment process. As a result of the surface treatment process, the crosslinking agent 6 is activated.

In fig. 5, a method for manufacturing a wind turbine rotor blade 3 according to a preferred embodiment of the invention is shown in a schematic flow chart. In a fourth method action 400, a wind turbine rotor blade 3 is manufactured, e. g., by using carbon fiber reinforced plastic (CFP) and/or glass fiber reinforced plastic (GRP) or the like. The manufactured wind turbine rotor blade 3 comprises a leading edge 2.

In a fifth method action 500, a plurality of leading edge protection devices 1 is arranged side by side at the leading edge 2 of the wind turbine rotor blade 3. The leading edge protection devices 1 are manufactured by a method according to the invention. Therefore, the leading edge protection devices 1 comprise a thermoplastic polyurethane material 4, which has been modified by an additional surface treatment. The leading edge protection devices 1 are arranged such that adjacent leading edge protection devices 1 are abutting each other.

In a sixth method action 600, the leading edge protection devices 1 are fixed to the wind turbine rotor blade 3. This can be achieved by the usage of an adhesive, welding or the like.

Fig. 5 shows a wind turbine rotor blade 3 according to a preferred embodiment of the invention in a schematic perspective view. The wind turbine rotor blade 3 comprises a root section 13, an intermediate section 14 and a tip section 15, wherein the intermediate section 14 is arranged between the root section 13 and the tip section 15. A leading edge 2 extends on one side of the wind turbine rotor blade 3 from the root section 13 to the tip section 15.

The leading edge 2 is covered by a plurality of leading edge protection devices 1 over its complete length. The leading edge protection devices 1 are arranged abutting each other and fixed to the wind turbine rotor blade 3. Thus, between two adjacent leading edge protection devices 1 each, an intersection 7 is constituted. The intersections 7 are smoothened by thermoplastic welding.

### Reference signs

- 1: leading edge protection device
- 2: leading edge
- 3: wind turbine rotor blade
- 4: thermoplastic polyurethane material
- 5: thermoplastic material compound
- 6: crosslinking agent
- 7: intersection
- 8: extrusion machine
- 9: conveying screw
- 10: heating device
- 11: shaping die
- 12: surface treatment device
- 13: root section
- 14: intermediate section
- 15: tip section

- 100: first method action
- 200: second method action
- 300: third method action
- 400: fourth method action
- 500: fifth method action
- 600: sixth method action

## Claims

1. Method for manufacturing a leading edge protection device (1) for a leading edge (2) of a wind turbine rotor blade (3), comprising:
- Providing a thermoplastic polyurethane material (4),
- processing the thermoplastic polyurethane material (4) by providing heat to the thermoplastic polyurethane material (4) and bringing the thermoplastic polyurethane material (4) into a predetermined shape to form the leading edge protection device (1), and
- further processing the leading edge protection device (1) by a surface treatment.

2. Method according to claim 1,
**characterIzed in,**
**that** the processing of the thermoplastic polyurethane material (4) comprises an extrusion process with the thermoplastic polyurethane material (4).

3. Method according to claim 1,
**characterIzed in,**
**that** the processing of the thermoplastic polyurethane material (4) comprises an injection molding process with the thermoplastic polyurethane material (4).

4. Method according to any of the previous claims,
**characterIzed in,**
**that** a thermoplastic polyurethane material (4) is provided as a thermoplastic material compound (5), wherein the thermoplastic material compound (5) comprises a crosslinking agent (6).

5. Method according to claim 4,
**characterIzed in,**
**that** the surface treatment is performed such that the crosslinking agent (6) is activated.

6. Method according to claim 4 or 5,
**characterIzed in,**
**that** a crosslinking agent (6) is used, which comprises a bio-based aromatic chain extender.

7. Method according to claim 6,
**characterIzed in,**
**that** a bio-based aromatic chain extender is used for the crosslinking agent (6), which is synthesized from caffeic acid.

8. Method according to any of the previous claims,
**characterIzed in,**
**that** the surface treatment comprises exposing the surface of the leading edge protection device (1) to UV-light and/or corona and/or plasma.

9. Method according to any of the previous claims,
**characterIzed in,**
**that** the surface treatment is performed with the leading edge protection device (1) before the leading edge protection device (1) is fully solidified.

10. Method according to any of the previous claims,
**characterIzed in,**
**that** the surface treatment is performed with the leading edge protection device (1) having inherent stability and still being plastically deformable by external force.

11. Method for manufacturing a wind turbine rotor blade (3) with a reinforced leading edge (2), comprising:
- Manufacturing a wind turbine rotor blade (3) with a leading edge (2),
- arranging a plurality of leading edge protection devices (1) side by side at the leading edge (2) of the wind turbine rotor blade (3), wherein the leading edge protection devices (1) have been manufactured by a method according to any of the previous claims, and
- fixing the leading edge protection devices (1) to the wind turbine rotor blade (3).

12. Method according to claim 11,
**characterIzed in,**
**that** intersections (7) between adjacent leading edge protection devices (1) are smoothened by introducing heat into the leading edge protection devices (1).

13. Method according to claim 12,
**characterIzed in,**
**that** for smoothening the intersections (7), a u-shaped heating device is used.

14. Method according to claim 12 or 13,
**characterIzed in,**
**that** for smoothening the intersections (7), additional thermoplastic polyurethane material (4) is provided at the intersections (7).

15. Wind turbine rotor blade (3), comprising an elongated body with a leading edge (2), wherein at the leading edge (2) a leading edge protection device (1) is arranged,
**characterIzed in,**
**that** the wind turbine rotor blade (3) is manufactured by a method according to any of claims 11 to 14.
